# EUROPÄISCHE PATENTSCHRIFT

(11) **EP 3 728 854 B1**
(45) Veröffentlichungstag und Bekanntmachung des Hinweises auf die Patenterteilung: **05.08.2026**
(21) Anmeldenummer: 18833640.8
(22) Anmeldetag: 19.12.2018
(51) Int. Cl.: F04D 13/08, F04D 29/046, F04D 29/42, F04D 29/58

(54) **PUMPENVORRICHTUNG, INSBESONDERE ÜBERFLUTBARE PUMPENVORRICHTUNG**
PUMP DEVICE, IN PARTICULAR SUBMERSIBLE PUMP DEVICE
ENSEMBLE POMPE, EN PARTICULIER ENSEMBLE POMPE SUBMERSIBLE

(30) Priorität: 22.12.2017 DE 102017131227
(43) Veröffentlichungstag der Anmeldung: 28.10.2020
(73) Patentinhaber: Frideco AG, 8213 Neunkirch (CH)
(72) Erfinder: STÄHLE, Carl, 8213 Neunkirch (CH)
(74) Vertreter: Daub, Thomas
(86) Internationale Anmeldenummer: PCT/EP2018/086013
(87) Internationale Veröffentlichungsnummer: WO 2019/122035

(56) Entgegenhaltungen:
- WO-A1-2012/024778
- DE-A1- 1 703 433
- DE-A1- 10 112 500
- DE-U1- 20 317 814
- JP-A- 2001 355 591
- JP-A- H11 201 077

## Beschreibung

### Stand der Technik

Die Erfindung betrifft eine Pumpenvorrichtung, insbesondere eine überflutbare Pumpenvorrichtung, nach dem Oberbegriff des Anspruchs 1.

Es sind bereits Pumpenvorrichtungen bekannt, bei welchen eine Kühlung eines Motors durch seitlich an einem Mantel der Pumpenvorrichtung verlaufende Kühlkanäle erfolgt. Des Weiteren sind Pumpenvorrichtungen bekannt, welche Gehäuseeinheiten für elektrische Komponenten aufweisen.

Ferner ist aus der Druckschrift DE 203 17 814 U1 ein Elektromotor mit einem Stator, einem Rotor und mit Lageraufnahmen, welche zur Aufnahme eines Gehäusemantels und des Stators vorgesehen sind und welche Kühlkanäle zur Führung eines Kühlmediums aufweisen, bekannt.

Zudem ist aus der Druckschrift WO 2012/024778 A1 eine Pumpenvorrichtung mit einer einteiligen Ausgestaltung von Gehäuse und Lageraufnahme bekannt.

Weiterhin ist aus der Druckschrift DE 101 12 500 A1 eine elektrohydraulische Antriebseinheit mit einem Elektromotor und einer davon angetriebenen hydraulischen Pumpe und einem Kühlkanal bekannt.

Die Aufgabe der Erfindung besteht insbesondere darin, eine gattungsgemäße Vorrichtung mit verbesserten Eigenschaften hinsichtlich einer Kühlung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Pumpenvorrichtung, insbesondere einer überflutbaren Pumpenvorrichtung, mit zumindest einer Lageraufnahme, welche dazu vorgesehen ist, ein Antriebswellenendlager aufzunehmen, wobei die Lageraufnahme zumindest einen Kühlkanal zur Aufnahme wenigstens eines Kühlfluids aufweist. Hierdurch kann eine verbesserte Kühlung bereitgestellt werden. Insbesondere kann das Antriebswellenendlager durch die Lageraufnahme gekühlt werden. Unter einer "Pumpenvorrichtung" soll insbesondere zumindest ein Teil, insbesondere eine Unterbaugruppe, einer Pumpe verstanden werden. Insbesondere kann die Pumpenvorrichtung auch die gesamte Pumpe aufweisen. Unter einer "Pumpe", insbesondere einer überflutbaren Pumpe, soll insbesondere ein Gerät verstanden werden, welches in zumindest einem Betriebszustand eine Bewegung eines zu pumpenden, vorzugsweise inkompressiblen Mediums bereitstellt. Die Pumpenvorrichtung weist erfindungsgemäß eine die Pumpe nach außen begrenzende Manteleinheit auf. Bevorzugt weist die Pumpenvorrichtung eine durch eine Motoreinheit der Pumpenvorrichtung betriebene Antriebswelle und/oder eine in zumindest einem Betriebszustand durch die Antriebswelle in Rotation versetzte Schraubeneinheit auf, wobei die Rotation der Schraubeneinheit die Bewegung des zu pumpenden Mediums bereitstellt. Alternativ kann die Pumpenvorrichtung einen durch eine Motoreinheit der Pumpenvorrichtung betriebene Kolbeneinheit aufweisen, welche durch einen Verdrängungsprozess das zu pumpende Medium in Bewegung versetzt. Insbesondere kann die Motoreinheit einen Verbrennungsmotor aufweisen. Besonders vorteilhaft weist die Motoreinheit einen Elektromotor auf. Die Pumpe kann insbesondere in zumindest einem Betriebszustand außerhalb und/oder zumindest teilweise oder auch vollständig innerhalb des zu pumpenden Mediums angeordnet sein.

Unter einem "Kühlfluid" soll insbesondere eine Flüssigkeit verstanden werden, welche dazu vorgesehen ist, Wärme zumindest eines Elements aufzunehmen und diese insbesondere an zumindest ein anderes Element zu übertragen. Bevorzugt besitzt das Kühlfluid eine hohe Wärmeleitfähigkeit und/oder Wärmekapazität. Besonders bevorzugt besitzt das Kühlfluid eine Viskosität, die es dem Kühlfluid erlaubt, gepumpt zu werden. Es ist denkbar, dass das Kühlfluid mit dem gepumpten Medium identisch ist, bevorzugt ist das Kühlfluid aber von dem gepumpten Fluid unterschiedlich und speziell zur Kühlung der Pumpe vorgesehen. Kühlfluide können beispielswiese Wasser und/oder Öle aufweisen.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Antriebswellenendlager" soll insbesondere eine Aufnahme verstanden werden, welche in einem montierten Zustand zumindest eine Lagereinheit der Pumpenvorrichtung zur Lagerung, insbesondere zur drehbaren Lagerung, zumindest eines Teils, insbesondere eines Endbereichs, einer Antriebswelle der Pumpenvorrichtung aufnimmt. Unter einer "Lagereinheit" soll insbesondere eine Einheit verstanden werden, welche dazu vorgesehen ist, eine Gewichtskraft zumindest eines Objekts zumindest im Wesentlichen aufzunehmen. Insbesondere kann die Lagereinheit zumindest ein Wälzlager und/oder Gleitlager aufweisen. Bevorzugt weist die Antriebswelle eine längliche Form auf, insbesondere weist die Antriebswelle eine Längserstreckung auf, welche mindestens 5-mal, insbesondere mindestens 10-mal, vorteilhaft mindestens 20-mal, besonders vorteilhaft mindestens 30-mal und vorzugsweise mindestens 50-mal so groß ist wie senkrecht zu der Längserstreckung ausgerichtete Erstreckungen der Antriebswelle. Besonders bevorzugt ist die Antriebswelle an einem ersten Ende der Antriebswelle insbesondere formschlüssig mit der Schraubeneinheit verbunden. Insbesondere ist die Antriebswelle an einem dem ersten Ende gegenüberliegenden zweiten Ende der Antriebswelle formschlüssig mit der Lagereinheit verbunden. Vorteilhaft ist in einem Teilbereich der Antriebswelle zwischen dem ersten und dem zweiten Ende die Motoreinheit angeordnet. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt.

Die Lageraufnahme ist plattenartig ausgebildet. Unter "plattenartig" soll insbesondere ein Element verstanden werden, bei dem ein kleinster gedachter Quader, welcher das Element gerade noch vollständig umschließt, eine Höhe aufweist, die maximal 50 %, insbesondere maximal 20 %, vorteilhaft maximal 10 %, vorzugsweise maximal 5 %, einer längsten Kante und/oder einer kürzesten Kante des Quaders entspricht. Denkbar ist, dass die Lageraufnahme zumindest eine zylindrische, insbesondere kreiszylindrische, Außenkontur aufweist. Bevorzugt ist die Außenkontur der Lageraufnahme als ein Quader ausgebildet. Beispielsweise kann die Lageraufnahme als Wandungsteil ausgebildet sein. Vorteilhaft ist die Lageraufnahme als Lagerdeckel ausgebildet. Unter einem "Lagerdeckel" soll insbesondere ein Element verstanden werden, welches gemeinsam mit einer Wandung der Pumpenvorrichtung einen äußeren Abschluss eines Volumens ausbildet. Der Lagerdeckel kann kraftschlüssig, formschlüssig und/oder stoffschlüssig mit der Wandung verbunden sein. Hierdurch kann eine vereinfachte Konstruktion und eine Bauraumoptimierung bereitgestellt werden. Insbesondere lässt sich die Lageraufnahme bei einem Transport und/oder einer Lagerhaltung leicht stapeln. Vorteilhaft lässt sich zumindest ein Teilbereich der Lageraufnahme in einem montierten Zustand als eine Ablagefläche und/oder Aufnahmefläche ausbilden.

Ferner wird vorgeschlagen, dass die Lageraufnahme zumindest eine Durchlassöffnung aufweist, welche zur Durchführung zumindest einer Baueinheit vorgesehen ist. Insbesondere kann die Baueinheit Teil der Pumpenvorrichtung sein und insbesondere zumindest eine Leitung, insbesondere zumindest ein Kabel und/oder zumindest eine von dem Kühlkanal verschieden ausgebildete Fluidleitung, aufweisen oder als eine Leitung, insbesondere ein Kabel und/oder eine von dem Kühlkanal verschieden ausgebildete Fluidleitung, ausgebildet sein. Die Durchlassöffnung weist insbesondere einen Durchmesser von höchstens einem Viertel, bevorzugt von höchstens einem Sechstel und besonders bevorzugt von höchstens einem Achtel eines Durchmessers der Lageraufnahme auf. Unter einem "Durchmesser" eines Objekts soll insbesondere ein Durchmesser eines kleinsten gedachten Zylinders verstanden werden, welcher das Objekt gerade noch umschließt. Insbesondere kann die Lageraufnahme insbesondere mehrere, voneinander verschiedene Durchlassöffnungen aufweisen, welche insbesondere dazu vorgesehen sein können, verschiedene Baueinheiten, insbesondere verschiedene Arten von Leitungen, aufzunehmen. Vorteilhaft sind die Leitungen als elektrische Leitungen ausgebildet. Hierdurch kann eine erhöhte Flexibilität erreicht werden. Insbesondere kann eine Anordnung von Bauteilen der Pumpenvorrichtung flexibler ausgestaltet werden. Beispielsweise kann zumindest ein erstes Bauteil auf einer Oberseite und/oder auf einer Unterseite der Lageraufnahme angeordnet sein. Vorteilhaft kann das erste Bauteil eine Baueinheit aufweisen, welche durch die Durchlassöffnung geführt ist und das erste Bauteil mit zumindest einem weiteren Bauteil auf einer gegenüberliegenden Seite der Lageraufnahme verbindet.

In einer weiteren Ausgestaltung wird vorgeschlagen, dass die Lageraufnahme zumindest teilweise in einem Gießverfahren hergestellt ist. Ferner kann die Lageraufnahme vollständig in einem Gießverfahren hergestellt sein. Bevorzugt werden Teile der Lageraufnahme in einem Gießverfahren hergestellt und während der Montage miteinander verbunden. Eine durch ein Gießverfahren hergestellte Lageraufnahme lässt sich insbesondere von einem Fachmann mittels ihm bekannter Methoden von einer Lageraufnahme unterscheiden, bei deren Herstellung andere Verfahren, insbesondere Schmiede- und/oder Zerspanungsverfahren, verwendet wurden. Beispielsweise weist ein durch ein Gießverfahren hergestelltes Produkt insbesondere zumindest ein Gussmetall auf, welches insbesondere dazu vorgesehen ist, in einem Gießverfahren verwendet zu werden. Hierdurch kann eine einfache Herstellung bereitgestellt werden. Insbesondere lässt sich die Lageraufnahme mit wenigen Arbeitsprozessen herstellen. Ferner weist eine in einem Gießverfahren hergestellte Lageraufnahme zumindest ein Gussmetall auf. Alternativ kann die Lageraufnahme in einem Stanzverfahren hergestellt sein. Hierdurch kann eine Effizienz gesteigert werden. Insbesondere kann die Herstellung der Lageraufnahme beschleunigt werden.

Ferner wird vorgeschlagen, dass der zumindest eine Kühlkanal der Lageraufnahme von einem gebohrten Kühlkanal gebildet ist. Denkbar ist insbesondere auch, dass der Kühlkanal von einem gefrästen Kühlkanal gebildet ist. Insbesondere ist der Kühlkanal durchgehend durch die gesamte Lageraufnahme ausgestaltet. In einer weiteren Ausgestaltung können mehrere Kühlkanäle in einer gemeinsamen Öffnung münden, die beispielsweise um einen Mittelpunkt der Lageraufnahme herum angeordnet ist. Zur Herstellung des gebohrten Kühlkanals wird insbesondere an einem Rohling, welcher dazu vorgesehen ist, in einem Fertigungsprozess zu einer Lageraufnahme verarbeitet zu werden, mittels eines Bohrgeräts durch Zerspanung ein Bohrloch erzeugt. Das Bohrloch bildet dabei insbesondere den gebohrten Kühlkanal aus. Ein durch ein Bohrloch gebildeter Kühlkanal lässt sich insbesondere von einem Fachmann mittels ihm bekannter Methoden von einem Kühlkanal unterscheiden, bei dessen Herstellung andere Verfahren, insbesondere Schmiede- und/oder Gießverfahren, verwendet wurden. Insbesondere weist der Kühlkanal eine zumindest im Wesentlichen zylindrische Form auf. Des Weiteren lässt sich ein Bohrprozess durch Rillen und/oder Riefen und/oder plastische Verformungen an der Oberfläche des Bohrlochs nachweisen. Hierdurch kann eine einfache Bauweise erreicht werden. Insbesondere können vorteilhaft mehrere Abführungen und/oder Zuführungen des Kühlfluids in einem Kühlkreislauf bereitgestellt werden. Insbesondere kann durch eine Wahl eines Bohrkopfs ein Durchmesser des Kühlkanals genau definiert werden. Des Weiteren kann für unterschiedliche Ausgestaltungen der Lageraufnahme derselbe Rohling benutzt werden, wodurch eine erhöhte Flexibilität ermöglicht werden kann.

Die Lageraufnahme weist zumindest zwei plattenartige Elemente auf, welche in einem montierten Zustand den zumindest einen Kühlkanal ausbilden. Insbesondere können die plattenartigen Elemente in einem montierten Zustand durch Schweißen und/oder Kleben und/oder zumindest eine Rastverbindung aneinander fixiert sein. Besonders vorteilhaft sind die plattenartigen Elemente in einem montierten Zustand mittels einer Schraubverbindung aneinander fixiert. Insbesondere können die plattenartigen Elemente jeweils zumindest eine Aussparung aufweisen, welche zumindest einen gemeinsamen Kühlkanal ausbilden. Bevorzugt weist nur ein plattenartiges Element die Aussparung auf. Hierdurch kann eine vereinfachte Herstellung, Montage und/oder Demontage ermöglicht werden. Insbesondere kann bei der Montage und Demontage die Lageraufnahme in Teilen montiert und demontiert werden, wodurch sich Gewicht und Volumen der während der Montage und Demontage zu handhabenden Bauteile verringert. Bevorzugt sind die Aussparungen als Nuten ausgebildet, welche an Anfang und Ende zum Äußeren der Lageraufnahme hin geöffnet sind. Unter der Formulierung, dass eine Aussparung, Ausnehmung, Nut, Kerbe oder ein Loch eines Objekts "zum Äußeren des Objekts hin geöffnet" ist, wird vorteilhaft verstanden, dass die Aussparung, Ausnehmung, Nut, Kerbe oder das Loch einen Leerraum definiert, welcher an einem Ende der Aussparung, Ausnehmung, Nut, Kerbe oder des Lochs einen direkten oder indirekten Kontakt zu dem das Objekt umgebenden Medium bildet. Unter einem "indirekten Kontakt" wird bevorzugt verstanden, dass der Leerraum an einen anderen Leerraum angrenzt, welcher einen direkten Kontakt zu dem das Objekt umgebenden Medium bildet. Bevorzugt dient eine erste Öffnung der Zufuhr des Kühlfluids und eine zweite Öffnung der Abfuhr des Kühlfluids. Beispielsweise können die Nuten die Lageraufnahme geradlinig durchziehen. In einer anderen Ausgestaltung können die Nuten gekrümmt sein. In einer weiteren Ausgestaltung können die Nuten in einer gemeinsamen Öffnung münden. Hierdurch kann eine verbesserte Kühlung bereitgestellt werden. Insbesondere kann ein verbesserter Fluss des Kühlfluids bereitgestellt werden. Des Weiteren kann eine einfache Bauweise erreicht werden. Insbesondere können mehrere Abführungen und/oder Zuführungen des Kühlfluids in einem Kühlkreislauf bereitgestellt werden.

In einer weiteren Ausgestaltung wird vorgeschlagen, dass die Pumpenvorrichtung zumindest einen Aufnahmebereich für zumindest eine Funktionseinheit aufweist, welcher zumindest teilweise durch die Lageraufnahme begrenzt und durch die Lageraufnahme in zumindest einem Betriebszustand gekühlt ist. Unter einem "Aufnahmebereich" soll insbesondere ein räumlicher Bereich verstanden werden, welcher sich auf einer dem Antriebswellenendlager abgewandten Seite der Lageraufnahme befindet und dazu vorgesehen ist, zumindest eine Funktionseinheit aufzunehmen und zu lagern. Beispielsweise kann der Aufnahmebereich zur Lagerung der Funktionseinheit eine Schweißnaht, eine Klebeschicht, eine Gewindeöffnung, eine Rastzunge oder einen Steckverbinder aufweisen. Die Funktionseinheit kann insbesondere Teil der Pumpenvorrichtung sein. Unter einer "Funktionseinheit" soll insbesondere eine Einheit verstanden werden, die dazu vorgesehen ist, in zumindest einem Betriebszustand zumindest eine Funktion bereitzustellen. Beispielsweise kann die Funktionseinheit eine Messeinheit und/oder eine Antriebseinheit und/oder eine Übertragungseinheit aufweisen. Vorzugsweise weist die Funktionseinheit elektrische Komponenten auf, welche durch die Lageraufnahme gekühlt werden. Besonders bevorzugt weist die Funktionseinheit zumindest eine elektronische Steuereinheit auf. Denkbar ist auch, dass die Funktionseinheit ein weiteres Antriebswellenendlager einer weiteren Antriebswelle aufweist. Hierdurch kann eine verbesserte Kühlung und eine Bauraumoptimierung bereitgestellt werden. Insbesondere kann die Lageraufnahme zusätzlich zur Kühlung des Antriebswellenendlagers eine Kühlung der Funktionseinheit bereitstellen.

Die Pumpenvorrichtung weist eine Manteleinheit auf, welche insbesondere als eine Kühleinheit ausgebildet sein kann, welche zumindest einen Kühlkanal umfasst. Insbesondere kann der Kühlkanal als Nut ausgebildet sein. Vorteilhaft bilden die Öffnungen in einem montierten Zustand mit dem Kühlkanal der Lageraufnahme eine gemeinsame Verbindung. Weiterhin können die Öffnungen eine Zufuhr oder Abfuhr des Kühlfluids ermöglichen. Bevorzugt bildet eine Nut der Lageraufnahme mit einer korrespondierenden Nut der Manteleinheit einen Kühlkreislauf. Alternativ kann ein Kühlkreislauf aus mehreren korrespondierenden Nutenpaaren bestehen. Hierdurch kann eine verbesserte Kühlung und vereinfachte Konstruktion bereitgestellt werden. Insbesondere kann die gesamte Antriebswelle durch einen Kühlkreislauf gekühlt werden.

Ferner wird vorgeschlagen, dass die Pumpvorrichtung eine Explosionsschutzeinheit aufweist, welche zumindest einen Explosionsschutz bereitstellt. Insbesondere kann die Explosionsschutzeinheit zumindest teilweise einstückig mit der Lageraufnahme und/oder dem Antriebswellenendlager und/oder dem Aufnahmebereich und/oder der Manteleinheit ausgebildet sein. Unter "zumindest teilweise einstückig" soll in diesem Zusammenhang insbesondere verstanden werden, dass zumindest ein Element einer ersten Einheit auch gleichzeitig Teil einer zweiten Einheit ist. Unter einem "Explosionsschutz" soll insbesondere eine Konformität, insbesondere bezüglich einer Bauweise, verstanden werden, welche den Ex-Schutzrichtlinien für eine gattungsgemäße Vorrichtung entspricht und eine Beschädigung der näheren Umgebung der Pumpenvorrichtung im Falle einer Explosion innerhalb der Pumpenvorrichtung verhindert. Dies kann beispielsweise durch eine verstärkte Manteleinheit und/oder durch eine Druckausgleichseinheit der Pumpenvorrichtung bereitgestellt werden. Unter einer "Druckausgleichseinheit" soll insbesondere eine Einheit verstanden werden, welche an einer Grenze zweier Bereiche angeordnet ist und im Fall einer Erhöhung des Drucks innerhalb des ersten Bereiches einen Druckausgleich mit dem zweiten Bereich bereitstellt. Eine Druckausgleichseinheit kann insbesondere als ein Ventil ausgebildet sein. Hierdurch kann eine erhöhte Sicherheit der Pumpenvorrichtung bereitgestellt werden.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Allerdings ist der Schutzbereich der Erfindung ausschließlich durch die Ansprüche festgelegt.

Es zeigen:
- Fig. 1: eine Pumpe mit einer Pumpenvorrichtung in einer stark vereinfachten schematischen Teilschnittdarstellung,
- Fig. 2: einen Teil der Pumpenvorrichtung mit einer Lageraufnahme in einer schematischen Teilschnittdarstellung,
- Fig. 3: einen Teil der Lageraufnahme in einer schematischen Darstellung,
- Fig. 4: einen Teil einer weiteren Lageraufnahme in einer schematischen Darstellung,
- Fig. 5: einen Teil einer weiteren Lageraufnahme in einer schematischen Darstellung,
- Fig. 6: einen Teil einer weiteren Lageraufnahme in einer schematischen Darstellung,
- Fig. 7: eine weitere Lageraufnahme in einer schematischen Darstellung,
- Fig. 8: eine weitere Lageraufnahme in einer schematischen Darstellung,
- Fig. 9: einen Teil einer weiteren Lageraufnahme in einer schematischen Darstellung und
- Fig. 10: einen Teil der weiteren Lageraufnahme aus Fig. 9 in einer schematischen Darstellung.

### Beschreibung der Ausführungsbeispiele

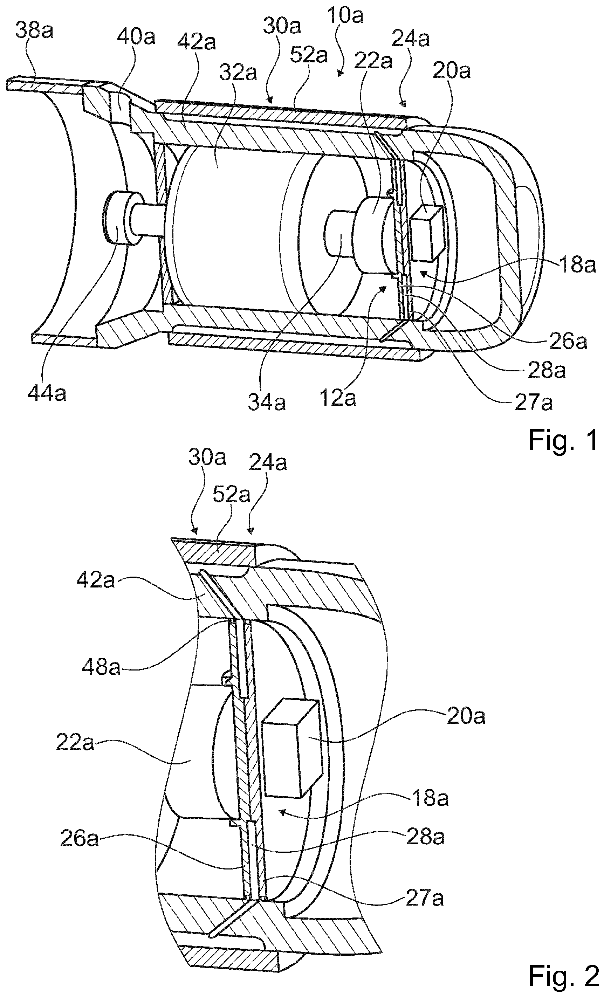

Fig. 1 zeigt in einer stark vereinfachten schematischen Teilschnittdarstellung eine Pumpe 10a. Die Pumpe 10a ist als eine überflutbare Pumpe 10a ausgebildet, welche sowohl in einem mit einem zu pumpenden Medium teilüberfluteten Zustand als auch in einem Zustand oberhalb des zu pumpenden Mediums betreibbar ist. Die Pumpe 10a weist hierzu ein spezielles Kühlsystem auf, welches auch im nicht-überfluteten Zustand eine ausreichende Kühlung ihrer Komponenten sicherstellt. Die Pumpe 10a ist beispielsweise als Kreiselpumpe ausgebildet.

Die Pumpe 10a weist eine Pumpenvorrichtung auf. Die Pumpenvorrichtung weist eine Manteleinheit 30a auf. Die Manteleinheit 30a begrenzt die Pumpe 10a nach außen. Die Manteleinheit 30a kann zumindest teilweise aus Edelstahl gefertigt sein. Die Manteleinheit 30a weist eine Außenwand der Pumpe 10a auf. Die Manteleinheit 30a weist einen Außenmantel 52a auf. Die Manteleinheit 30a weist Mantelkühlkanäle 42a auf, welche dazu vorgesehen sind, ein Kühlfluid aufzunehmen und/oder zu leiten. Die Mantelkühlkanäle 42a der Manteleinheit 30a stellen eine Kühlung eines Innenraums der Pumpe 10a bereit. Die Mantelkühlkanäle 42a sind durch ein Anordnen des Außenmantels 52a über der Außenwand gebildet. Beispielsweise könnte der Außenmantel durch eine Presspassung an der Außenwand fixiert werden.

Die Pumpenvorrichtung weist eine Motoreinheit 32a auf. Die Motoreinheit 32a weist einen Elektromotor auf. Alternativ könnte die Motoreinheit 32a jedoch auch einen Verbrennungsmotor aufweisen. Die Motoreinheit 32a stellt eine Rotationsbewegung einer Antriebswelle 34a der Pumpenvorrichtung bereit. Die Antriebswelle 34a ist mit der Motoreinheit 32a wirkverbunden. Die Antriebswelle 34a ist dazu vorgesehen, die Rotationsbewegung an eine Arbeitseinheit 44a (lediglich schematisch vereinfacht dargestellt) der Pumpenvorrichtung zu übertragen.

Die Arbeitseinheit 44a ist mit der Antriebswelle 34a wirkverbunden. Die Arbeitseinheit 44a weist eine Schraubeneinheit auf. Die Schraubeneinheit ist dazu vorgesehen, durch die Rotationsbewegung das zu pumpende Medium in eine Richtung zu bewegen. Die Richtung ist von der Form der Schraubeneinheit definiert. Beispielsweise kann die Schraubeneinheit eine Spiralform aufweisen. Das zu pumpende Medium wird in zumindest einem Betriebszustand durch eine Zufuhr 38a an die Schraubeneinheit geleitet. Die Zufuhr 38a kann beispielsweise als eine Rohröffnung ausgebildet sein. Die Schraubeneinheit bewegt das zu pumpende Medium in Richtung einer Abfuhr 40a. Die Abfuhr 40a ist dazu vorgesehen, das zu pumpende Medium aus der Pumpe 10a heraus zu leiten. Die Abfuhr 40a kann beispielsweise als eine weitere Rohröffnung ausgebildet sein.

Die Arbeitseinheit 44a weist eine Kühleinheit auf. Die Kühleinheit weist eine Kühlschraubeneinheit auf. Die Kühlschraubeneinheit ist dazu vorgesehen, zumindest ein zu pumpendes Kühlfluid in eine Richtung zu bewegen. Die Kühlschraubeneinheit bewegt das Kühlfluid in Richtung der Mantelkühlkanäle 42a. Das Kühlfluid weist beispielsweise ein Öl auf, in einer weiteren Ausgestaltung kann das Kühlfluid Wasser und/oder Alkohol aufweisen.

Die Pumpenvorrichtung weist eine Lageraufnahme 12a auf. Die Lageraufnahme 12a weist Kühlkanäle 28a zur Aufnahme des Kühlfluids auf. Die Lageraufnahme 12a ist dazu vorgesehen, ein Antriebswellenendlager 22a der Pumpenvorrichtung aufzunehmen. Das Antriebswellenendlager 22a ist zu einer Drehlagerung der Antriebswelle 34a an einem der Arbeitseinheit 44a abgewandten Ende der Antriebswelle 34a vorgesehen. Insbesondere stellen die Kühlkanäle 28a der Lageraufnahme 12a eine Kühlung des Antriebswellenendlagers 22a und/oder der Motoreinheit 32a bereit. Die Mantelkühlkanäle 42a der Manteleinheit 30a sind in einem montierten Zustand mit den Kühlkanälen 28a der Lageraufnahme 12a fluidverbunden. Insbesondere können die Mantelkühlkanäle 42a der Manteleinheit 30a mit den Kühlkanälen 28a der Lageraufnahme 12a zumindest Teil eines gemeinsamen Kühlkreislaufs sein. Die Lageraufnahme 12a ist plattenartig, insbesondere als ein Lagerdeckel, ausgebildet.

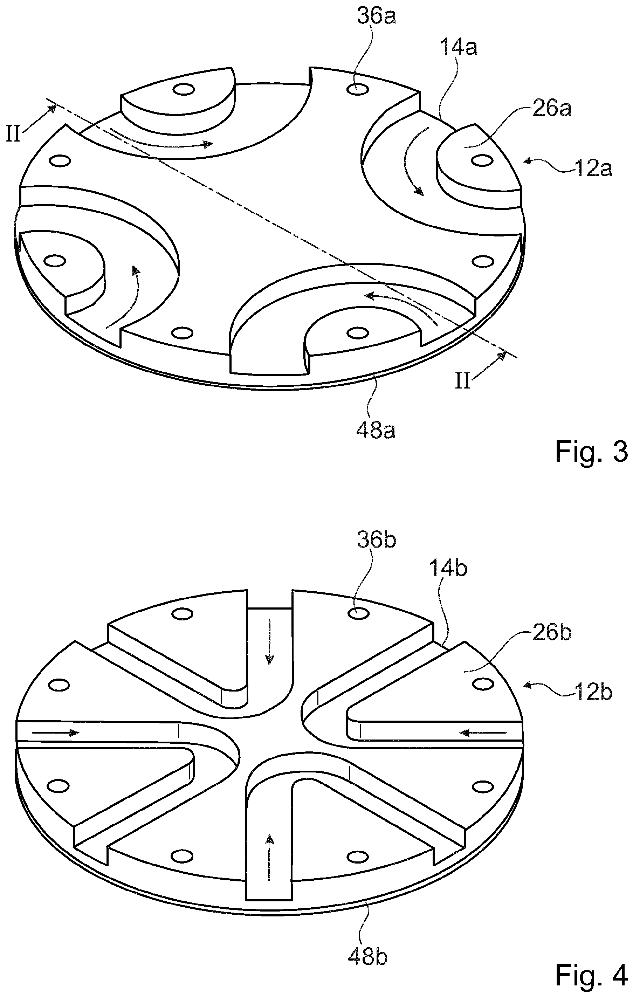

Eine vergrößerte Darstellung der Mantelkühlkanäle 42a und der Kühlkanäle 28a ist in Fig. 2 dargestellt. Fig. 2 zeigt einen Teil der Pumpenvorrichtung in einer Schnittdarstellung entlang einer Linie II-II in Fig. 3. Fig. 3 zeigt einen Teil der Lageraufnahme 12a in einer isometrischen Darstellung. Die Mantelkühlkanäle 42a sind jeweils an Anfang und Ende zum Äußeren der Manteleinheit 30a hin offen. Die Kühlkanäle 28a der Lageraufnahme 12a sind als Nuten ausgebildet. Die Kühlkanäle 28a sind jeweils an Anfang und Ende zum Äußeren der Lageraufnahme 12a hin offen.

Die Öffnungen der Kühlkanäle 28a und der Mantelkühlkanäle 42a bilden in einem montierten Zustand gemeinsame Verbindungen aus. Diese gemeinsamen Verbindungen können insbesondere zumindest teilweise einen gemeinsamen Kühlkreislauf ausbilden. Beispielsweise kann eine gemeinsame Öffnung das Kühlfluid von der Manteleinheit 30a zur Lageraufnahme 12a zuführen, während eine andere gemeinsame Öffnung das Kühlfluid von der Lageraufnahme 12a zur Manteleinheit 30a abführt. In alternativen Ausgestaltungen kann eine beliebige Zahl der korrespondierenden Kühlkanäle 28a und Mantelkühlkanäle 42a zumindest teilweise einen insbesondere zumindest teilweise verzweigten Kühlkreislauf bilden, insbesondere kann die Pumpenvorrichtung eine beliebige Zahl Zuführungen und/oder Abführungen des Kühlfluids aufweisen. Die Lageraufnahme 12a weist Schraubenaufnahmen 36a auf. Die Schraubenaufnahmen 36a sind zu einer Aufnahme von Schrauben vorgesehen. Die Schrauben dienen der Fixierung der Lageraufnahme 12a. Die Schraubenaufnahmen 36a können jeweils mit einem Gewinde versehen sein.

Fig. 3 zeigt ein plattenartiges Element 26a der Lageraufnahme 12a. Die Lageraufnahme 12a weist zwei plattenartige Elemente 26a, 27a auf. Die plattenartigen Elemente 26a, 27a sind miteinander verschraubt, insbesondere unter Verwendung der Schraubenaufnahmen 36a. Alternativ können die plattenartigen Elemente 26a, 27a mit einem Rastverschluss oder durch einen Drehverschluss aufeinander fixiert sein.

Die plattenartigen Elemente 26a, 27a sind zueinander identisch ausgebildet, weshalb im Folgenden lediglich das plattenartige Element 26a beschrieben wird. Die plattenartigen Elemente 26a weisen jeweils Fugen 48a auf, welche zu einer Aufnahme eines Dichtungsrings vorgesehen sind. Die plattenartigen Elemente 26a weisen jeweils Aussparungen 14a auf. Die Aussparungen 14a sind als vier halbringförmige Nuten ausgebildet. Die Nuten sind in einem 90°-Winkel zueinander angeordnet. In alternativen Ausgestaltungen kann eine beliebige Anzahl Nuten, die einem beliebigen Anteil eines Rings entsprechen, in einer beliebigen Anordnung angeordnet sein. Die Aussparungen 14a bilden in einem montierten Zustand beider plattenartigen Elemente 26a gemeinsame Kühlkanäle 28a aus. Die Kühlkanäle 28a sind zu einer Aufnahme des Kühlfluids vorgesehen. Eine Flussrichtung des Kühlfluids innerhalb der Kühlkanäle 28a wird durch Pfeile dargestellt. Alternativ kann die Flussrichtung des Kühlfluids in einzelnen oder mehreren Kühlkanälen auch umgekehrt sein. Ein Zuführen und Abführen des Kühlfluids erfolgt in radialer Richtung relativ zu einer Rotationsachse der Antriebswelle 34a. In einer alternativen Ausgestaltung könnte auch nur ein erstes plattenartiges Element 26a die Aussparungen 14a aufweisen. Das zweite plattenartige Element 26a könnte beispielsweise eine glatte Oberfläche aufweisen. Die Lageraufnahme 12a, insbesondere die plattenartigen Elemente 26a, 27a, sind in einem Gießverfahren hergestellt. Die Pumpenvorrichtung weist einen Aufnahmebereich 18a auf. Der Aufnahmebereich 18a ist dazu vorgesehen, eine Funktionseinheit 20a der Pumpenvorrichtung aufzunehmen. Die Kühlkanäle 28a der Lageraufnahme 12a stellen eine Kühlung des Aufnahmebereichs 18a und/oder der Funktionseinheit 20a bereit. Die Funktionseinheit 20a ist beispielsweise als eine elektronische Steuereinheit der Pumpenvorrichtung ausgebildet.

Weiterhin weist die Pumpenvorrichtung eine Explosionsschutzeinheit 24a auf. Die Explosionsschutzeinheit 24a ist an der Lageraufnahme 12a angeordnet. Die Explosionsschutzeinheit 24a ist dazu vorgesehen, einen den Ex-Schutzrichtlinien für eine gattungsgemäße Vorrichtung entsprechenden Explosionsschutz im Bereich der Lageraufnahme 12a bereitzustellen. Beispielsweise kann die Explosionsschutzeinheit 24a Dichtungseinheiten aufweisen, welche eine Druckfestigkeit der Lageraufnahme 12a steigern. Die Dichteinheiten können dabei in den Fugen 48a angeordnet sein.

In Fig. 4 bis 10 sind sechs weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Fig. 4 bis 10 ist der Buchstabe a durch die Buchstaben b bis g ersetzt. Einzelne oder sämtliche der in Fig. 4 bis 10 gezeigten Pfeile zur Darstellung einer Flussrichtung können in alternativen Ausgestaltungen auch umgekehrt sein.

Fig. 4 bis 6 zeigen plattenartige Elemente 26b-d von jeweils einer Lageraufnahme 12b-d, welche unterschiedliche Ausgestaltungen von Aussparungen 14b-d aufweisen.

Fig. 4 zeigt das plattenartige Element 26b der Lageraufnahme 12b mit den Aussparungen 14b, welche jeweils als vier Nuten ausgebildet sind. Die Nuten weisen jeweils zwei gerade Abschnitte und einen gekrümmten Abschnitt auf, welcher die beiden geraden Abschnitte verbindet. Die Nuten sind in einem 90°-Winkel zueinander angeordnet. In einer alternativen Ausgestaltung kann eine beliebige Anzahl Nuten mit einem beliebigen Krümmungsgrad des gekrümmten Abschnitts und/oder einer beliebigen Länge der geraden Abschnitte in einer beliebigen Anordnung vorgesehen sein. Hierdurch kann eine bessere Kühlung eines Teilbereichs der Lageraufnahme 12b erreicht werden. Der Teilbereich ist als ein Nahbereich der Mitte der Lageraufnahme 12b ausgebildet.

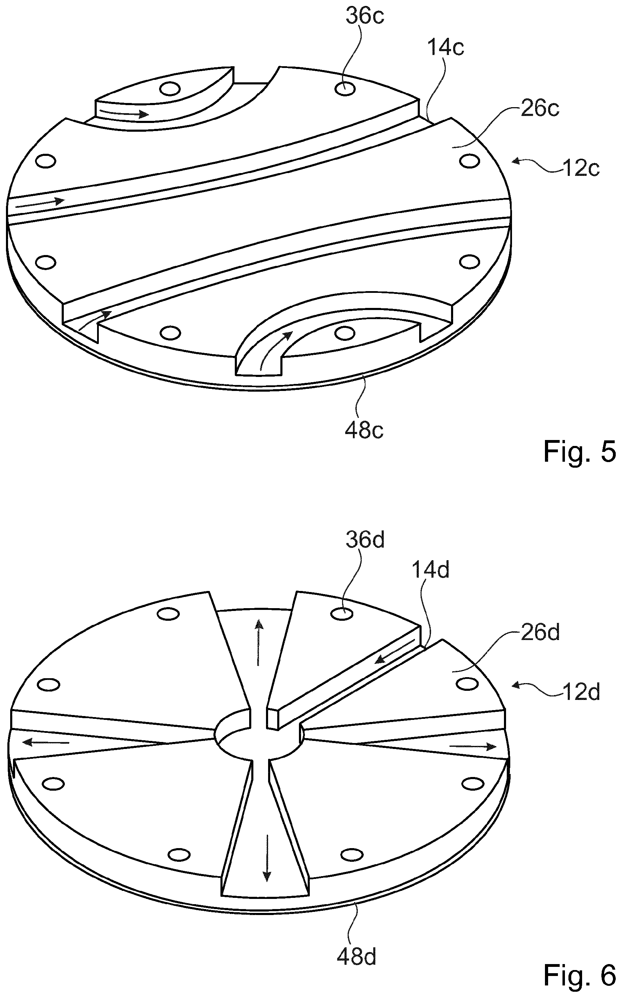

Fig. 5 zeigt das plattenartige Element 26c der Lageraufnahme 12c mit den Aussparungen 14c, welche als vier unterschiedlich gekrümmte Nuten ausgebildet sind. Die Aussparungen 14c durchziehen voneinander beabstandet die gesamte Lageraufnahme 12c. Alternative Ausgestaltungen können beliebig viele, beliebig voneinander beabstandete Nuten mit beliebiger Krümmung aufweisen.

Fig. 6 zeigt das plattenartige Element 26d der Lageraufnahme 12d, welche Aussparungen 14d in Form von vier trapezförmigen Nuten aufweist. Die Nuten enden in einer zentralen kreisförmigen Nut. Von der kreisförmigen Nut geht eine weitere geradlinige Nut aus. In dieser Ausgestaltung dient die gerade Nut dem Zuführen des Kühlfluids. Die trapezförmigen Nuten dienen dem Abführen des Kühlfluids. In einer alternativen Ausgestaltung kann die gerade Nut dem Abführen des Kühlfluids dienen und die trapezförmigen Nuten dem Zuführen des Kühlfluids. In alternativen Ausgestaltungen kann eine beliebige Anzahl trapezförmiger und/oder gerader Nuten in einer beliebigen Anordnung vorgesehen sein.

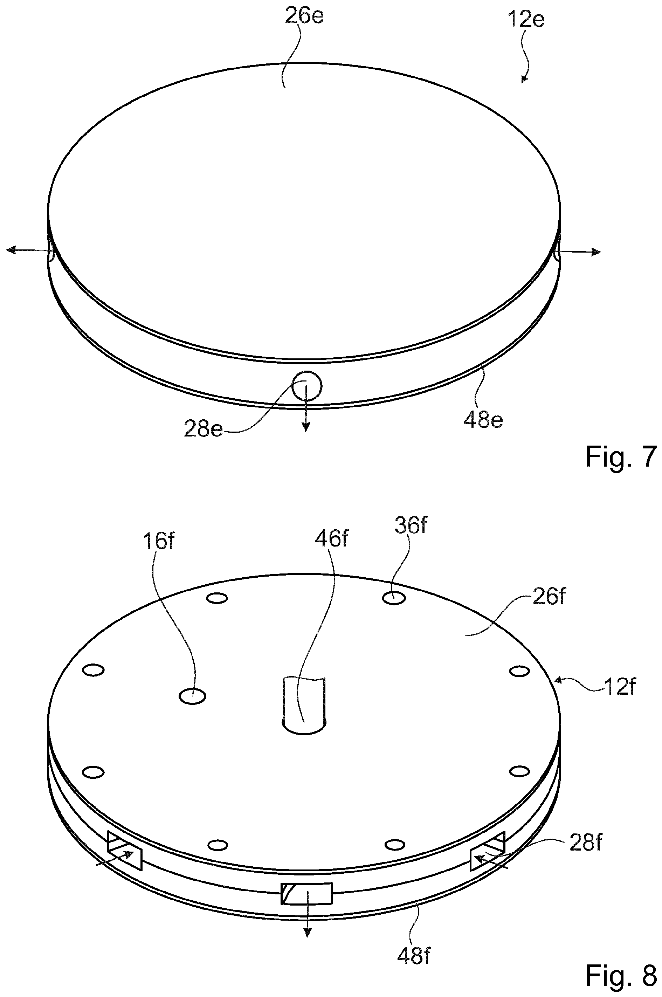

Fig. 7 zeigt eine Lageraufnahme 12e, welche nicht der Erfindung entspricht und aus einem einzelnen plattenartigen Element 26e besteht und gebohrte Kühlkanäle 28e aufweist. Das plattenartige Element 26e wurde zunächst in einem Gießverfahren hergestellt. Anschließend wurden die Kühlkanäle 28e durch Bohrungen in das plattenartige Element 26e hergestellt. Die gebohrten Kühlkanäle 28e sind in dieser Ausgestaltung als fünf Bohrungen bereitgestellt, welche sich in einem Mittelpunkt der Lageraufnahme 12e treffen, wobei analog zu Fig. 4 eine der Bohrungen dem Zuführen des Kühlfluids dient, während die übrigen Bohrungen dem Abführen des Kühlfluids dienen. Alternativ kann die Lageraufnahme 12e eine Reihe von durchgehenden Bohrungen aufweisen. In weiteren Ausgestaltungen kann die Anzahl und Anordnung der Bohrungen beliebig verändert werden.

Fig. 8 zeigt eine Lageraufnahme 12f, welche Aussparungen 14f aufweist, die analog zu den Aussparungen 14b in Fig. 4 ausgestaltet sind. Die Lageraufnahme 12f weist zwei Durchlassöffnungen 16f auf. Die Durchlassöffnungen 16f weisen untereinander unterschiedliche Öffnungsgrößen auf. Die Durchlassöffnungen 16f können in einem montierten Zustand Objekte aufnehmen. Eine der Durchlassöffnungen 16f nimmt eine Baueinheit 46f auf. Die Baueinheit 46f ist als eine elektrische Leitung ausgebildet. Die Durchlassöffnungen 16f sind an einer dem Antriebswellenendlager 22a zugewandten Seite und an einer dieser Seite gegenüberliegenden Seite geöffnet. In alternativen Ausgestaltungen können die Durchlassöffnungen 16f identische Größen und/oder eine beliebige Anzahl aufweisen. Die Explosionsschutzeinheit (nicht dargestellt) der Pumpenvorrichtung weist weitere Dichteinheiten auf. Die weiteren Dichteinheiten sind innerhalb der Durchlassöffnungen 16f angeordnet. Von den Durchlassöffnungen 16f aufgenommene Objekte werden durch die Dichteinheiten innerhalb der Durchlassöffnungen 16f fixiert.

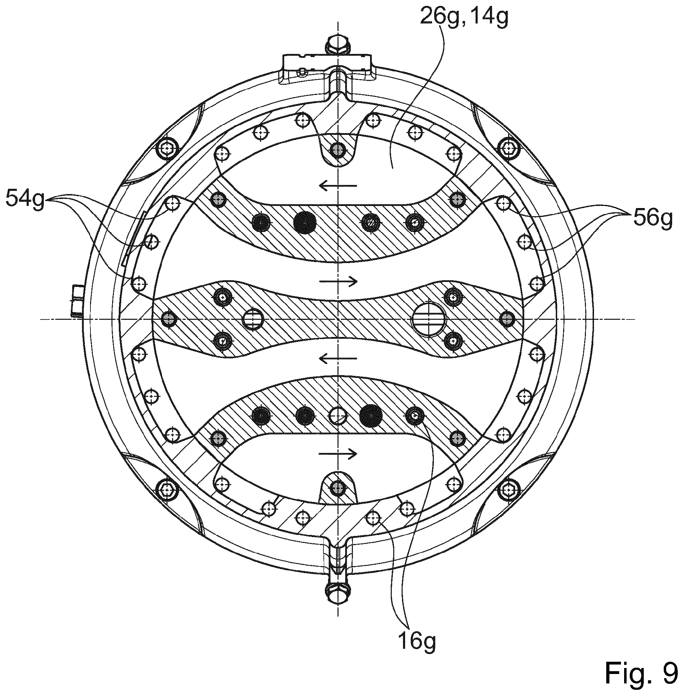

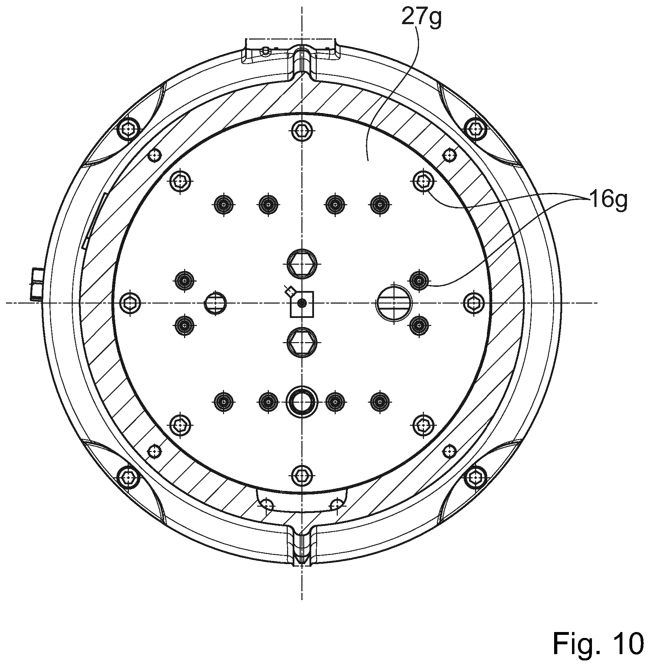

Fig. 9 und Fig. 10 zeigen eine Lageraufnahme 12g. Die Lageraufnahme 12g weist ein plattenartiges Element 26g auf. Das plattenartige Element 26g weist Aussparungen 14g auf, die analog zu den Aussparungen 14c in Fig. 5 ausgestaltet sind. Das plattenartige Element 26g weist Durchlassöffnungen 16g auf. Das plattenartige Element 26g weist Axialzufuhren 54g auf. Die Axialzufuhren 54g stellen eine Zuführung des Kühlfluids in axialer Richtung relativ zu einer Drehachse einer Antriebswelle (nicht dargestellt) bereit. Das plattenartige Element 26g weist Axialabfuhren 56g auf. Die Axialzufuhren 54g stellen eine Zuführung des Kühlfluids in axialer Richtung relativ zu der Drehachse der Antriebswelle bereit. Die Lageraufnahme 12g weist ein plattenartiges Element 27g auf, welches verschieden von dem plattenartigen Element 26g ausgebildet ist. Das plattenartige Element 27g weist eine glatte Oberfläche auf. Das plattenartige Element 27g ist als ein Lagerdeckel ausgebildet. Das plattenartige Element weist ebenfalls Durchlassöffnungen 16g auf. Die plattenartigen Elemente 26g, 27g bilden gemeinsame Kühlkanäle (nicht dargestellt) aus, welche u-förmig ausgebildet sind.

### Bezugszeichen

- 10: Pumpe
- 12: Lageraufnahme
- 14: Aussparung
- 16: Durchlassöffnung
- 18: Aufnahmebereich
- 20: Funktionseinheit
- 22: Antriebswellenendlager
- 24: Explosionsschutzeinheit
- 26: Plattenartiges Element
- 27: Plattenartiges Element
- 28: Kühlkanal
- 30: Manteleinheit
- 32: Motoreinheit
- 34: Antriebswelle
- 36: Schraubenaufnahme
- 38: Zufuhr
- 40: Abfuhr
- 42: Mantelkühlkanal
- 44: Arbeitseinheit
- 46: Baueinheit
- 48: Fugen
- 52: Außenmantel
- 54: Axialzufuhr
- 56: Axialabfuhr

## Patentansprüche

1. Pumpenvorrichtung, insbesondere überflutbare Pumpenvorrichtung, mit zumindest einer Lageraufnahme (12a-f), welche dazu vorgesehen ist, ein Antriebswellenendlager (22a) aufzunehmen, wobei die Lageraufnahme (12a-f) zumindest einen Kühlkanal (28a-f) zur Aufnahme wenigstens eines Kühlfluids aufweist, und mit einer Manteleinheit (30a), wobei die Manteleinheit (30a) eine Außenwand einer Pumpe (10a) aufweist, und welche Kühlkanäle (28a) umfasst, die in einem montierten Zustand mit dem Kühlkanal (28a-f) der Lageraufnahme (12a-f) verbunden sind, **dadurch gekennzeichnet, dass** die Lageraufnahme (12a-f) plattenartig ausgebildet ist, wobei die Lageraufnahme (12a-d; 12f) zumindest zwei plattenartige Elemente (26a-d, 27a-d; 26f, 27f) aufweist, welche in einem montierten Zustand den zumindest einen Kühlkanal (28a-d; 28f) ausbilden.

2. Pumpenvorrichtung nach Anspruch 1, **dadurch gekennzeichnet, dass** die Lageraufnahme (12f) zumindest eine Durchlassöffnung (16f) aufweist, welche zu einer Durchführung zumindest einer Baueinheit (46f) vorgesehen ist.

3. Pumpenvorrichtung nach einem der vorhergehenden Ansprüche, **dadurch gekennzeichnet, dass** die Lageraufnahme (12a-f) zumindest teilweise in einem Gießverfahren hergestellt ist.

4. Pumpenvorrichtung nach einem der vorhergehenden Ansprüche, **dadurch gekennzeichnet, dass** der zumindest eine Kühlkanal (28e) der Lageraufnahme (12e) von einem gebohrten Kühlkanal (28e) gebildet ist.

5. Pumpenvorrichtung nach einem der vorhergehenden Ansprüche, **gekennzeichnet durch** zumindest einen Aufnahmebereich (18a) für zumindest eine Funktionseinheit (20a), welcher zumindest teilweise durch die Lageraufnahme (12a-f) begrenzt und durch die Lageraufnahme (12a-f) in zumindest einem Betriebszustand gekühlt ist.

6. Pumpenvorrichtung nach einem der vorhergehenden Ansprüche, **gekennzeichnet durch** eine Explosionsschutzeinheit (24a-f), welche zumindest einen Explosionsschutz bereitstellt.

7. Pumpe (10a), insbesondere überflutbare Pumpe (10a), mit zumindest einer Pumpenvorrichtung nach einem der vorhergehenden Ansprüche.

## Claims

1. A pump device, in particular a submersible pump device, having at least one bearing receptacle (12a-f) which is configured for receiving a drive shaft end bearing (22a), wherein the bearing receptacle (12a-f) has at least one cooling channel (28a-f) for receiving at least one cooling fluid, and having a shell unit (30a), wherein the shell unit (30a) has an outer wall of a pump (10a), and which shell unit (30a) comprises cooling channels (28a) which, in a mounted state, are connected to the cooling channel (28a-f) of the bearing receptacle (12a-f), **characterized in that** the bearing receptacle (12a-f) is of plate-like form, wherein the bearing receptacle (12a-d; 12f) has at least two plate-like elements (26a-d, 27a-d; 26f, 27f) which, in a mounted state, form the at least one cooling channel (28a-d; 28f).

2. The pump device according to claim 1, **characterized in that** the bearing receptacle (12f) has at least one passage opening (16f) which is implemented as a pass-through for at least one structural unit (46f).

3. The pump device according to any one of the preceding claims, **characterized in that** the bearing receptacle (12a-f) is produced at least partially in a casting process.

4. The pump device according to any one of the preceding claims, **characterized in that** the at least one cooling channel (28e) of the bearing receptacle (12e) is implemented by a drilled cooling channel (28e).

5. The pump device according to any one of the preceding claims, **characterized by** at least one receiving region (18a) for at least one functional unit (20a), which receiving region (18a), at least partially, is delimited by the bearing receptacle (12a-f) and is cooled via the bearing receptacle (12a-f) in at least one operating state.

6. The pump device according to any one of the preceding claims, **characterized by** an explosion protection unit (24a-f) which provides at least one explosion protection feature.

7. A pump (10a), in particular a submersible pump (10a), having at least one pump device according to any one of the preceding claims.

## Revendications

1. Dispositif de pompe, en particulier dispositif de pompe inondable, comprenant au moins un logement de palier (12a-f) qui est prévu pour recevoir un palier d'extrémité d'arbre d'entraînement (22a), le logement de palier (12a-f) présentant au moins un canal de refroidissement (28a-f) pour recevoir au moins un fluide de refroidissement, et comprenant une unité d'enveloppe (30a), l'unité d'enveloppe (30a) présentant une paroi extérieure d'une pompe (10a) et comprenant des canaux de refroidissement (28a) qui, dans un état monté, sont connectés au canal de refroidissement (28a-f) du logement de palier (12a-f), **caractérisé en ce que** le logement de palier (12a-f) est réalisé en forme de plaque, le logement de palier (12a-d ; 12f) présentant au moins deux éléments en forme de plaque (26a-d, 27a-d ; 26f, 27f) qui, dans un état monté, forment l'au moins un canal de refroidissement (28a-d ; 28f).

2. Dispositif de pompe selon la revendication 1, **caractérisé en ce que** le logement de palier (12f) présente au moins une ouverture de passage (16f) qui est prévue pour un passage d'au moins une unité structurelle (46f).

3. Dispositif de pompe selon l'une quelconque des revendications précédentes, **caractérisé en ce que** le logement de palier (12a-f) est fabriqué au moins en partie dans un procédé de coulée.

4. Dispositif de pompe selon l'une quelconque des revendications précédentes, **caractérisé en ce que** l'au moins un canal de refroidissement (28e) du logement de palier (12e) est formé par un canal de refroidissement (28e) percé.

5. Dispositif de pompe selon l'une quelconque des revendications précédentes, **caractérisé par** au moins une région de réception (18a) pour au moins une unité fonctionnelle (20a), laquelle est limitée au moins en partie par le logement de palier (12a-f) et est refroidie par le logement de palier (12a-f) dans au moins un état de fonctionnement.

6. Dispositif de pompe selon l'une quelconque des revendications précédentes, **caractérisé par** une unité de protection contre les explosions (24a-f) qui fournit au moins une protection contre les explosions.

7. Pompe (10a), en particulier pompe inondable (10a), comprenant au moins un dispositif de pompe selon l'une quelconque des revendications précédentes.
